# EUROPEAN PATENT SPECIFICATION

(11) **EP 2 517 296 B1**
(45) Date of publication and mention of the grant of the patent: **11.12.2013**
(21) Application number: 10819677.5
(22) Date of filing: 21.12.2010
(51) Int. Cl.: H01M 8/06, H01M 8/14, H01M 8/24

(54) **"SYSTEM AND METHOD FOR SEPARATING CO2 FROM COMBUSTION EXHAUST GAS BY MEANS OF MCFC MULTISTACKS"**
SYSTEM UND VERFAHREN ZUR CO2-ABSCHEIDUNG AUS EINEM VERBRENNUNGSABGAS MIT MCFC-MULTISTACKS
SYSTÈME ET PROCÉDÉ DE SÉPARATION DU CO2 DE GAZ D'ÉCHAPPEMENT DE COMBUSTION AU MOYEN D'EMPILEMENTS MULTIPLES DE MCFC (PILES À COMBUSTIBLE À CARBONATE FONDU)

(30) Priority: 21.12.2009 IT MI20092259
(43) Date of publication of application: 31.10.2012
(73) Proprietor: Ansaldo Energia S.p.A., Genova (IT)
(72) Inventor: CAPRILE, Luciano, I-16142 Genova (IT); PASSALACQUA, Biagio, I-16032 Camogli (IT); TORAZZA, Arturo, I-16162 Genova (IT)
(74) Representative: Bergadano, Mirko
(86) International application number: PCT/IB2010/003315
(87) International publication number: WO 2011/077224

(56) References cited:
- EP-A2- 0 418 864
- EP-A2- 0 442 352
- US-A- 5 541 014
- US-A1- 2005 271 914

## Description

### TECHNICAL FIELD

The present invention relates to a system and a method for separating CO₂ from combustion exhaust gas by means of molten-carbonate-fuel-cell (MCFC) multistacks.

More precisely, the subject of the invention is an MCFC system, in particular an MCFC multistack system, i.e., a system made up of a number of stacks of MCFCs (or by a number of blocks of stacks), having an internal configuration that enables it to operate as separator of CO₂ from combustion exhaust gas (flue gas) generating at the same time electrical energy with high efficiency, simplified water management, and limited requirements of supplementary cleaning of the gas.

The invention hence falls within the field of systems for separation of CO₂ from combustion exhaust gas and more specifically within the sector of processes and devices capable of selectively extracting CO₂ from the exhaust gas in which it is diluted so as to render it available in concentrated form in a gas flow from which it can be easily separated. Still more specifically, the invention falls within the sector of MCFC-CCS (Molten-Carbonate Fuel Cell - Carbon Capture and Storage) systems, namely, systems in which by means of MCFCs CO₂ is extracted from the exhaust gas in which it is diluted and is concentrated in a flow of gas rich in water vapour and substantially without diluting N₂ so as to facilitate subsequent capture thereof.

### BACKGROUND ART

Known to the art is the capacity of MCFC plants for carrying out separation of CO₂ from combustion exhaust gas supplied to the cathode. Various plant schemes have been proposed, with both pressurized solutions and solutions at atmospheric pressure.

The capacity of MCFCs to extract CO₂ from the cathodic gas and to release it into the anodic gas derives in fact from the operating principle itself of the cells; however, it is normally necessary, in order to provide efficient CCS systems, to manipulate the anode output gas prior to separation of CO₂.

Known to the art are various modes of manipulating the anodic exhaust so as to obtain, in addition to the flow of CO₂ to be sequestered, also recovered H₂O and residual fuels to be used, as likewise known is a plurality of different ways in which the energy and/or products obtained through said manipulations can be recovered within the MCFC-CCS system or for external uses.

In general, known MCFC systems, even when they are configured as multistacks (i.e., made up of a number of stacks of cells connected to one another), are constituted by stacks identical to one another and supplied so as to work all in the same nominal process conditions. However, having all the stacks of an MCFC system incorporated in an MCFC-CCS plant in the same nominal conditions does not in itself constitute a general rule. In fact, with reference to the MCFC system as such, it has been known for a long time that it is possible to set two or more stacks in some way fluidically in series, with respect to the anodic supply, to the cathodic supply, or to both.

The above idea (once again with reference to MCFC systems devised for being incorporated in a system for generation of energy and not to MCFC systems designed for operating as parts of a device for capturing CO₂) has been in fact proposed in various ways, each with a specific aim.

For example, the document No. EP442352 describes some schemes in which the outputs of a first stack, or portions thereof, concur in generating the flows of supply of a second stack of the same type (and vice versa portions of the outlets of the second stack concur in turn in supplying the first stack). In this patent the fluidic connections are studied for achieving higher levels of cell performance, thanks to the fact that it is possible to work with percentages of CO₂ at the cathodic inlet that are higher than the ones that would be obtained by adopting the classic solution, simpler from a plant-design point of view, of recirculating all the anodic outlets directly at the cathodic inlet, after prior combustion of the residual fuels.

The document No. US5413878 proposes, both in order to improve the efficiency and to favour control of thermal management, setting fluidically in series (both cathode side and anode side) two or more stacks, by sharing between them the overall electrical current that is to be obtained from the fuel supplied as a whole, instead of forcing generation in a single stack.

The document No. EP0947022 suggests how to connect a number of stacks fluidically in parallel anode side and in series cathode side (but with appropriate integrations of air between one stack and another) so as to achieve a good thermal management, using standardized stacks that are all identical to one another.

It should be noted that in all the examples cited, and in other similar ones that could be cited, all the CO₂ that has accumulated in the anodic outlets is to function as cathodic reagent within the MCFC system itself, without envisaging spaces for an extraction and capture thereof. In other words, all the CO₂ circulating is discharged into the atmosphere from one or more cathodic outlets.

The fluidic connection in series between stacks in multistack plants is known also in hybrid systems that incorporate stacks of different technologies (for example, from US6033794, US6623880, and US5541014).

The document No. US7396603 discloses an example of hybrid system with stacks of different technologies set fluidically in series inserted in an MCFC-CCS system. In particular, this patent describes a system in which, in order to convert the anodic exhaust of MCFCs into a flow of CO₂ suitable for being captured by elimination of residual H₂, the anodic exhaust of the MCFCs is used for supplying the anode of a proton-exchange-membrane (PEM) stack, suitable for working with extremely intense use of H₂. In this solution, two stacks set fluidically in series (namely, on the anode side) are hence used, but just one of the two (the MCFC stack) works as separator of CO₂ from the combustion exhaust gas. The fluidic connection between the stacks, in this case, hence has nothing to do with the configuration internal to the MCFC system incorporated in the MCFC-CCS plant, an aspect that, instead, tackled by the present invention.

In practice, it is known that an MCFC multistack system does not necessarily have to adopt the natural solution of setting fluidically in parallel all the stacks so as to have in all of them the same process conditions, but that organization in a particular fluidic network of their supplies and their exhausts is able to modify the functional characteristics of the system, even though today, in effect, practically all MCFC multistack plants actually built have their stacks supplied in parallel.

MCFC technology has been developed basically in view of application to generation of electrical energy, following two orientations: stacks studied for operating under pressure, and stacks studied for operating at atmospheric pressure.

For the CCS application, since the exhaust gas released is at atmospheric pressure, use of pressurized MCFCs would require recompression of the entire flow of the exhaust gas. The consequent penalization inevitably relegates pressurized solutions to marginal roles.

Consequently, solutions operating at atmospheric pressure are in general preferred.

At atmospheric pressure (unless extremely small areas of cell are used or unless the design of the cell is radically changed, which tends to lead to technical or economical inconsistencies that are even more radical), if it is desired to render thermal management and respect of the limits on the pressure differentials compatible it is necessary to carry out reforming of the methane, using internal reformers (i.e., reformers arranged inside the stack).

Various types of internal reformers are known.

The first is of a direct type, the so-called "direct internal reformer" (DIR), with the catalysts arranged in the anodic compartment and completely immersed in the cell environment. This solution presents many advantages: it exploits fully the heat generated by the cells, it recovers steam produced by the reaction, and it draws benefit from the consumption of H₂, which re-launches conversion of methane. Examples of reformers of this type are described in US3488226 and US4788110.

Another type of internal reformer is the so-called "indirect internal reformer" (IIR), where the catalysts are set in a series of reforming units, each of which is inserted between two cells or between two sets of cells. Each unit uses the heat yielded thereto by the contiguous cells, but is unable to exploit the steam produced in the cell or benefit from the consumption of H₂ to cause progress in conversion of methane. On the other hand, the catalysts do not come into contact with the cell environment and are consequently preserved from attack by the vapours present in the anodic gas, including the electrolyte vapours. Examples of reformers of this type are described in US4182795 and US5348814.

Also a variant of IIR reformer has been proposed, which reduces at least the steam requirement: the IIR reformer, one for each cell, functions as second stage, downstream of a first stage (external to the stack) entering which, together with fresh methane, is also the recirculation of a portion of anodic exhaust.

A third type of internal reformer is known as "advanced internal reformer" (AIR), and basically represents a combination of IIR and DIR, having upstream a first reform stage of an indirect type in common with two or more cells, and downstream a second stage, of a direct type, in each cell. Examples of reformers of this type are described in the documents Nos. US4877693, US5175062, and US6974644.

The reformer of an IIR type, which presents manifest disadvantages as compared to the DIR and AIR types in terms of degree of conversion and as regards the need to supply previously from the outside the entire requirement of steam, presents, however, the advantage of having the catalysts protected from the electrolyte vapours.

However, with reference to MCFCs for distributed generation, the increased mastery over key aspects of the technology, including the progress in the stability of the catalysts and their distribution in the cell area, has progressively made it possible to get the cells to work at temperatures increasingly more uniform and with progressively lower mean values. This has attenuated the burden deriving from the leakages of electrolyte in vapour phase and consequently increased the service life of the stacks with direct internal reformer, rendering adoption thereof increasingly more convenient. Incidentally, said factors can be exploited better and are more marked in AIR stacks than in those with simple DIR, and this has progressively contributed to their assertion on the market.

In any case, in the field of distributed generation, both the stacks with simple DIR that those with AIR are today preferable and preferred to those with IIR.

The situation is completely reversed if the MCFC system is to be used for CCS applications, because in this latter case the oxidant is not air but exhaust gas, which, albeit downstream of standard purification systems, still contains levels of contaminants enormously higher than those of air.

Precisely for this reason the direct-reformer solutions, both DIR and AIR, cannot be advantageously used because they would require an extremely intense supplementary desulphuration of the exhaust gas. In order to have an acceptable duration, it would be necessary, that is, to clean the exhaust gas until it is brought to the levels of the air itself. Without the direct reformer, instead, the requirement of supplementary desulphuration can be drastically attenuated.

In fact, with the direct reformer, the catalysts end up being exposed also to the contaminants present in the exhaust gas, since some poisons (in particular sulphur and its compounds), even when they are introduced into the cell from the cathode side, end up automatically, on account of the reactions with the gases and with the materials of cell, being released, either totally or in part, in the anodic gas.

Given that thermal management is integrally entrusted to internal reforming, the premature death of the catalysts renders in effect this solution unrealizable. In addition, the phenomenon is further accelerated by a perverse positive-feedback mechanism with marked production of electrolyte vapours.

The dynamics of "poisoning" of the catalysts for systems of this type are at the limit of acceptability already today, in the use of MCFCs as "simple generators" with clean oxidants so that there is no margin for tolerating a further aggravation of the problem due to the use of dirtier oxidants.

Bringing the level of the contaminants of the exhaust gas back to those typical of the process air in usual distributed generation calls for manipulations that are so accentuated as to render the system practically unusable. It would be necessary, in fact, to resort to costly implementations of classic abatement systems with the highest levels of performance.

In summary:
- the pressurized solutions would be feasible only in those cases where the burden of recompressing the entire flow of exhaust gas were bearable (and adequate turbocompressors were available); and
- at atmospheric pressure, either the exhaust gas is cleaned bringing it back practically to the level of air or it is necessary to resort back to the IIR solution, in the basic version without anodic recirculation, with evident limits in terms of degree of conversion of the methane and of steam requirement.

Pathways to increasing the conversion of methane, albeit limiting this to the use of indirect internal reformers as those indicated by US4365007 or US4702973, prove problematical and entail extreme risk as regards effective incorporation into large-sized systems with cells of large area.

In practice, the application of MCFCs to systems specifically designed for capture of CO₂ from combustion exhaust gas (hence in MCFC-CCS systems) preferably calls for MCFC systems at atmospheric pressure.

In the field of distributed generation, the most efficient MCFCs at atmospheric pressure are today those with direct internal reformer and namely with AIR.

However, currently these cells cannot advantageously be used for the CCS application. In fact, no solution is available that enables the use of MCFC stacks with direct internal reformer (DIR or AIR) to provide the MCFC system of an MCFC-CCS plant, without the need to resort in effect to adoption, upstream of the MCFC system, of an extremely high performance system for cleaning the exhaust gas such as to bring the level of contaminants back to the typical one of usual process air in the application of MCFCs to distributed generation.

### DISCLOSURE OF INVENTION

An aim of the present invention is to provide a system and a method for separation of CO₂ from combustion exhaust gas that is free from the drawbacks of the known art highlighted herein; in particular, an aim of the invention is to provide a system and a method that will enable separation of CO₂ from combustion exhaust gas with high electrical efficiency, simplified water management, and limited requirements of supplementary cleaning of the exhaust gas.

The present invention hence regards a system and a method for separation of CO₂ from combustion exhaust gas as defined in basic terms in the annexed Claim 1 and Claim 8, respectively, as well as, as regards the preferred additional features, in the dependent claims.

### BRIEF DESCRIPTION OF THE DRAWINGS

The invention is described in detail in the following non-limiting examples of embodiment, with reference to the annexed figures, in which:
- Figure 1 is a schematic view of a system for separation of CO₂ from combustion exhaust gas according to a first embodiment of the present invention;
- Figure 2 is a schematic view of the system of the invention according to a second embodiment; and
- Figures 3, 4, and 5 illustrate combined-cycle power plants, in which the system of the invention is used.

### BEST MODE FOR CARRYING OUT THE INVENTION

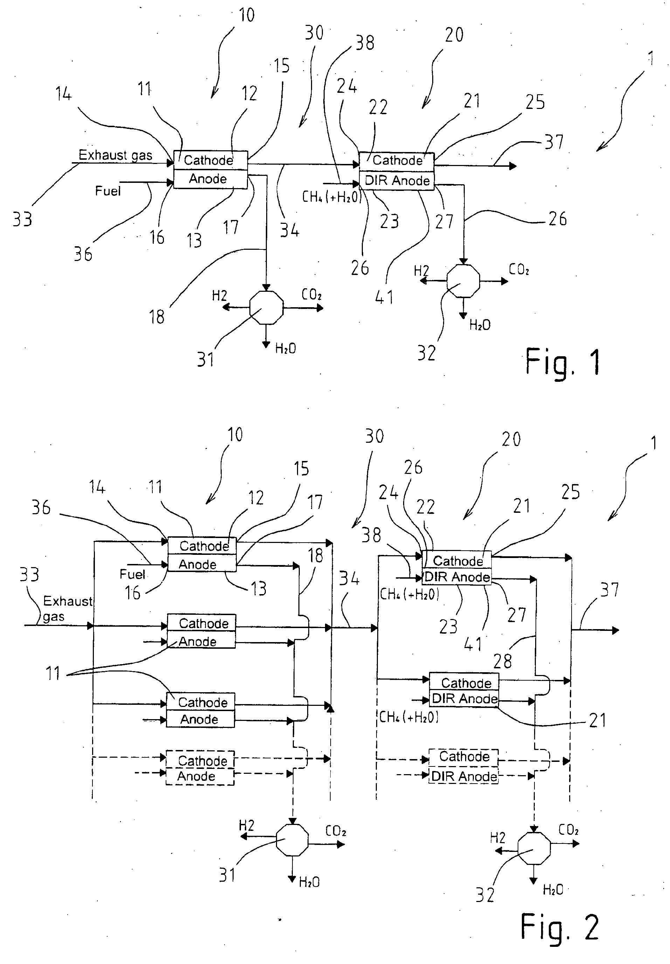

In Figure 1 designated as a whole by 1 is a system for the separation of CO₂ from combustion exhaust gas, in particular an MCFC-CCS system (i.e., a molten-carbonate fuel-cell system operating as separator of CO₂ from combustion exhaust gas).

The system 1 comprises a first MCFC unit 10, a second MCFC unit 20, and a connection network 30 that connects the units 10, 20 to one another and to at least one, and preferably to respective, CO₂-capture units 31, 32.

Each unit 10, 20 includes at least one MCFC 11, 21 and preferably a stack of MCFCs 11, 21; in any case, the cells 11, 21 of the units 10, 20 have respective cathodic compartments 12, 22 and respective anodic compartments 13, 23.

The cathodic compartments 12 of the cells 11 of the first unit 10 have a cathodic inlet 14, connected to a exhaust-supply line 33, which supplies the cathodic compartments 12 with an oxidizing gas flow made up, in particular, of combustion exhaust gas coming from an industrial plant that makes use of combustion processes, and a cathodic outlet 15, connected to a cathodic inlet 24 of the second unit 20 via a cathodic line 34.

The anodic compartments 13 of the cells 11 of the first unit 10 have an anodic inlet 16, connected to a fuel-supply line 36 that supplies the anodic compartments 13 with a fuel gas (for example, but not necessarily, natural gas), and an anodic outlet 17 connected to the CO₂-capture unit 31 via a anode outlet line 18.

The first unit 10 is formed by one or more MCFCs 11 without direct internal reformer, i.e., cells that not are provided with active direct-internal-reforming devices.

By "direct internal reformer" is meant a device for reforming fuel in which the catalysts effective for the reaction of reforming or conversion of the fuel are at least in part contained directly in the anodic compartment of the cell, as in so-called DIRs or AIRs. By the expression "cells not provided with direct internal reformer" is meant cells that in the anodic compartment do not contain active fuel-reforming catalysts, i.e., that do not contain said catalysts at all or contain exhausted and/or ineffective catalysts.

The cathodic compartments 22 of the cells 21 of the second unit 20 are connected to the cathodic outlet 15 of the first unit 10 via the cathodic line 34, and have a cathodic outlet 25 connected to an exhaust line 37.

The anodic compartments 23 of the cells 21 of the second unit 20 have an anodic inlet 26, connected to a fuel-supply line 38, which supplies the anodic compartments 23 with fuel gas, and an anodic outlet 27 connected to the CO₂-capture unit 32 via an anode outlet line 28.

The second unit 20 is formed by one or more MCFCs 21 with direct internal reformer, i.e., cells that are provided with respective active direct internal reformers 41 (DIRs or AIRs).

Preferably, but not necessarily, the cells 21 are provided with respective reformers 41 of an AIR type.

In Figure 1 (and also in the subsequent figures), the cells 21 bear the indication "DIR anode" to indicate that the anodic compartments 23 of these cells are provided with a generic direct internal reformer. The generic indication "anode" in the figures indicates instead an anodic compartment of a cell without direct internal reformer.

According to the invention, the flow of combustion exhaust gas that is to be treated is supplied to the cathodic compartments 12 of the cells 11 of the first unit 10, formed by cells 11 without direct internal reformer; the cathodic compartments 22 of the cells 21 of the second unit 20, formed by cells 21 provided, instead, with the direct internal reformers 41, are supplied with the cathodic exhaust coming from the first unit 10.

Consequently, in general, the system 1 comprises cells 11, 21 having (at least) two different types of reformer, and specifically cells 21 having direct reformer (DIR or AIR) and cells 11 without direct reformer. The cells 11, 21 are connected in such a way that the exhaust gas to be treated is introduced into the cells 11, 21 of the system 1 through the cathodic inlets 14 of cells 11 without direct reformer, and that the cathodic compartments 22 of the cells 21 with direct reformer are supplied with flows of gas that do not include portions of exhaust gas that have not previously passed into the cathodic compartments 12 of cells 11 without direct reformer.

The cells 11 of the first unit 10 work with limited use of CO₂ and remove spontaneously and almost integrally from the exhaust gas, displacing them into their own anodic compartment 13, those residual contaminants, primarily sulphur, that precisely the reactions with the cell materials and with the gases render liable to be transferred from the cathodic compartment 12 to the anodic compartment 13.

The cathodic compartments 22 of the cells 21 of the second unit 20 are then supplied with a flow of oxidizing gas from which a large portion of the contaminants that could poison the reforming catalysts have been removed; the cells 21 of the second unit 20 are equipped with direct internal reformers 41 (DIRs or, preferably, AIRs) to exploit all the advantages thereof.

It is clear that the first unit 10 (with cells 11 without direct internal reformer) can be built in a wide range of ways and configurations.

For example, the first unit 10 can be built using cells 11 with only indirect reformer, or cells with indirect reformer flanked either by an external reformer or by a hydrogen-recovery system, as shown in the Italian patent application MI2009A001246 filed in the name of the present applicant.

Considering that the first unit 10, by functioning in effect as first stage for concentration of CO₂ set upstream of a second stage (constituted by the second unit 20) that works with higher separation efficiency, does not have the task of separating a very high fraction of the CO₂ present in the exhaust gas, it can even be built with cells with only external reformer or even without reformer that are supplied only with H₂ recovered by the final CO₂ separator, installed on the anodic exhaust of the system 1. On the latter hypotheses, it is preferable to use a cell with parallel flows (co-flow cell or counter-flow cell).

Of course, the unit 10 can also contain blocks of a number of stacks of cells 11 without direct internal reformer of a different type. In addition, also each individual block could include stacks of a different type, provided that obviously they are all with cells without direct internal reformer.

The cells 11 could also be cells initially provided with direct reformer (DIR or AIR), but can be equated to cells without direct internal reformer, in so far as their catalysts are by now totally or partially de-activated. This situation could prove advantageous when "second-hand" stacks were available, for example, ones taken off the market in so far as they are by now unable to carry out reforming inside them their own methane requirement and hence to operate with medium-to-high current densities, but are still able to operate at medium-to-low current densities, provided they are supplied with "ready to use" fuel, generated outside.

It is then evident that the exhaust gas can supply in parallel one or more blocks of stacks of cells 11 without direct internal reformer, that each block of stacks of cells 11 can supply one or more blocks of stacks of cells 21 with direct internal reformer, or, vice versa, that concurring in the supply of a block of stacks of cells with direct internal reformer are the outlets of more than one block of stacks of cells without direct internal reformer.

In general, according to the invention the exhaust gas traverses cathodic compartments of cells without direct internal reformer before being introduced into cathodic compartments of cells with direct internal reformer.

Energy and products recovered via the units 10, 20 can then be used in various ways. In particular, the anodic exhausts rich in CO₂ can be manipulated, either individually or once gathered together, with known modalities.

Likewise, also recirculations and recoveries can occur within a single block or with transfers from one block to another.

It is also possible to make additions of air to the exhaust gas upstream of the inlet of one or more of the stacks of cells without direct internal reformer, to the gas at the cathodic inlet of one or more of the stacks of cells with direct internal reformer, to both, or in any other internal point of the system.

Hence, it clearly emerges that the system 1 can assume a wide range of configurations.

In the embodiment shown in Figure 2, the units 10, 20 are formed by respective pluralities of cells or stacks of cells 11, 21 arranged in parallel.

In particular, in each unit 10 the cathodic compartments 12 of the cells 11 are connected in parallel by the exhaust-supply line 33, which is appropriately branched, and the anodic compartments 13 are supplied with fuel gas via one or respective fuel-supply line or lines 36.

The cathodic outlets 15 of the cells 11 are connected in parallel by the cathodic line 34, which supplies in parallel the cathodic compartments 22 of the cells 21. The cathodic outlets 25 of the cathodic compartments 22 are connected in parallel by the exhaust line 37. The anodic compartments 23 of the cells 21 are supplied with fuel gas via one or respective fuel-supply lines 38.

The anodic outlets 17, 27 of the cells 11, 21 belonging to each unit 10 20 are connected in parallel to supply the respective CO₂-capture unit 31, 32.

The present invention can be implemented both with MCFC systems operating at atmospheric pressure and with pressurized MCFC systems.

In particular, according to an advantageous embodiment, a pressurized MCFC system with the internal configuration is used by the invention in a natural-gas combined cycle, expressly built with a view to capturing and separating CO₂.

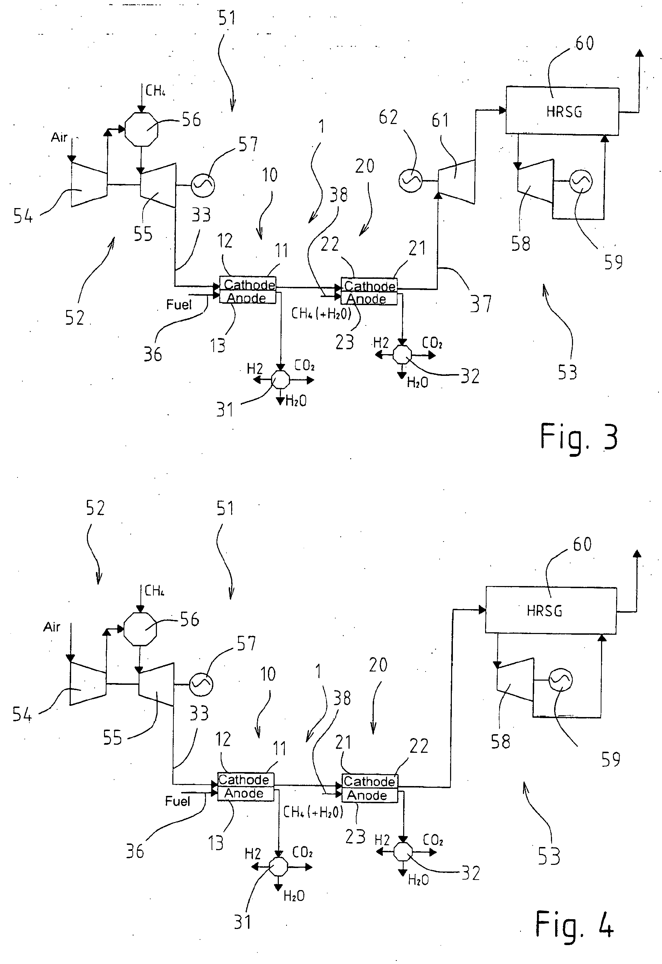

Figure 3 precisely shows a combined-cycle plant 51, comprising a gas-turbine assembly 52, a steam-turbine assembly 53, and a system 1 according to the invention, set between the assemblies 52, 53.

The assemblies 52, 53 are substantially known and are consequently not described in detail for simplicity. In general, the assembly 52 comprises a compressor 54, a gas turbine 55 supplied with combustion exhaust gas produced by a burner 56 (schematically shown on the outside of the gas turbine 55), in which a fuel gas, for example natural gas, is burnt together with compressed air in the compressor 54, and an electric generator 57.

The assembly 53 comprises a steam turbine 58, which actuates a generator 59, and a heat exchanger 60 (operating as steam generator).

The combustion exhaust gas coming out of the gas turbine 55 is sent, via the exhaust-supply line 33, to the cathodic compartments 12 of the cells 11 of the first unit 10, formed by cells 11 without direct internal reformer, as described previously.

The anodic compartments 13, 23 of the cells 11, 21 of the two units 10, 20 are connected to the fuel-supply lines 36, 38 and to the CO₂-capture units 31, 32 as described previously.

The cathodic exhaust coming out of the first unit 10, as already described, supplies the cathodic compartments 22 of the cells 21 of the second unit 20, formed by cells 21 with direct internal reformer.

The cathodic exhaust of the second unit 20 is sent, via the exhaust line 37, to the assembly 53 and is specifically used for producing steam for supplying the steam turbine 58. In the example shown in Figure 3, the flow of gas coming from the cathodic compartments 22 traverses first an auxiliary turbine 61 (connected to another generator 62), and then the heat exchanger 60 for producing steam, which is sent to the steam turbine 58. Both of the units 10, 20 are pressurized; namely, they are formed by stacks of cells operating under pressure.

In the variant of Figure 4, instead, both of the units 10, 20 operate at atmospheric pressure. The plant 51 shown in Figure 4 is once again a combined-cycle plant comprising a gas-turbine assembly 52, a steam-turbine assembly 53, and a system 1 according to the invention, set between the assemblies 52, 53. In this case, the assembly 53 does not have the auxiliary turbine 61, and the cathodic exhaust of the second unit 20 is sent directly to the heat exchanger 60.

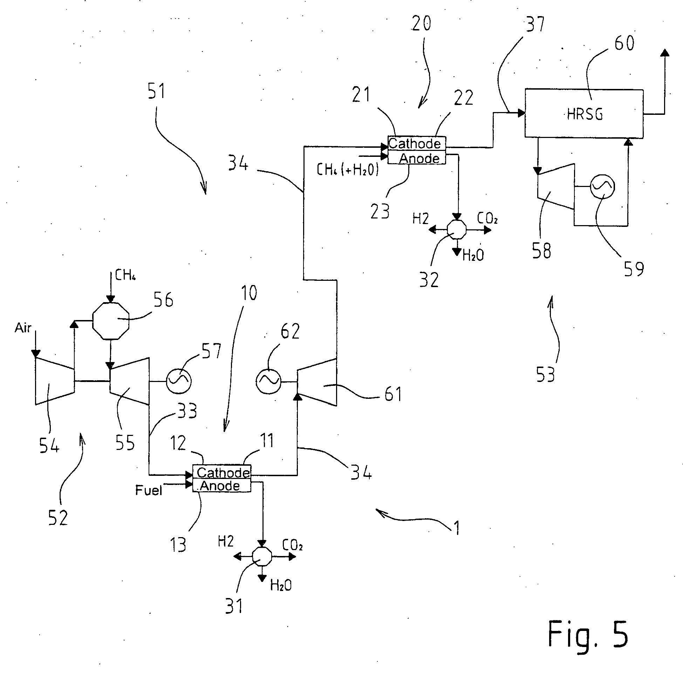

In the further variant of Figure 5, the first unit 10 (with cells 11 without direct internal reformer) is pressurized, namely, it operates under pressure, whilst the second unit 20 (having the cells 21 with direct internal reformer) operates at atmospheric pressure.

The first unit 10 is set between the gas-turbine assembly 52 and an auxiliary turbine 61; the second unit 20 is set along the cathodic line 34, between the auxiliary turbine 61 and the steam-turbine assembly 53.

The cathodic exhaust coming out of the cathodic compartments 12 of the cells 11 of the first unit 10 is sent, via the cathodic line 34, to the auxiliary turbine 61 where it expands, and then to the cathodic compartments 22 of the cells 21 of the second unit 20. The cathodic exhaust of the second unit 20 is sent, via the exhaust line 37, to the assembly 53 and specifically to the heat exchanger 60 for producing steam, which is sent to the steam turbine 58.

From what has been set forth above the advantages of the present invention with respect to the known art emerge clearly.

The first advantage, of a general type, is the one typical of CO₂ separators operating with MCFCs: in the separation of CO₂ they produce energy instead of consuming it, as instead do conventional systems, all of a passive type.

A second advantage, once again of a general type, is the full flexibility as regards the sizes of the system and the possibility of operating also at atmospheric pressure (whilst pressurized systems are in general subject to the constraint of requiring an effective association with a turbocompressor that is actually available).

The more specific advantages of the invention emerge from the comparison of the versions at atmospheric pressure with CO₂ separators having MCFCs at atmospheric pressure built according to the known art.

As compared to MCFC systems supplied with only an external reformer, there is a considerable advantage in terms of average current density, given the modest capacity of cooling that would be obtained by limiting use to flowrates that respect the limits on the.pressure differentials.

As compared to known MCFC systems with direct reformer, there is a decisive advantage in terms of lower requirements of supplementary cleaning of the exhaust gas. For example, the abatement of SOx required is one order of magnitude lower.

As compared to systems with only indirect reformer there are clear advantages in terms of water management, levels of performance, and also as regards lower cleaning requirements. In fact the reduced conversion of methane has repercussions on the composition of the fuel, which, in turn, accentuates the sensitivity of the performance to phenomena of poisoning.

Finally, it is understood that further modifications and variations may be made to the system and to the method described and illustrated herein, without thereby departing from the scope of the annexed claims.

## Claims

1. A system for separating CO₂ from combustion exhaust gas by means of MCFC multistacks, comprising: a first MCFC unit (10) and a second MCFC unit (20), having respective cells (11, 21) with respective cathodic compartments (12, 22) and respective anodic compartments (13, 23); at least one CO₂-capture unit (31, 32); and a connection network (30) that connects the MCFC units (10, 20) to one another and to the CO₂-capture units (31, 32); the system being **characterized in that** the first MCFC unit (10) is formed by one or more first MCFC cells (11) without active direct internal reformer; and the second MCFC unit (20) is formed by one or more second MCFC cells (21) with active direct internal reformer; and **in that** the connection network connects the MCFC units (10, 20) in such a way that the exhaust gas to be treated is supplied to the cathodic compartments (12) of the first cells (11) that form the first unit (10), and that the cathodic compartments (22) of the second cells (21) that form the second unit (20) is supplied with a cathodic exhaust of the first unit (10), either alone or with additions that do not include portions of exhaust gas that have not previously passed into cathodic compartments (12) of cells (11) of the first unit (10).

2. The system according to Claim 1, wherein the first unit (10) comprises only first cells (11) selected in the group consisting of: cells with indirect internal reformer, cells with indirect internal reformer set alongside an external reformer, cells with indirect internal reformer set alongside a hydrogen-recovery system, cells with external reformer, cells without reformer and supplied only with recovered hydrogen, and combinations thereof.

3. The system according to Claim 1 or Claim 2, wherein the second MCFC unit (20) comprises one or more second cells (21) equipped with direct internal reformers (41) of a DIR type or, preferably, of an AIR type.

4. The system according to any one of the preceding claims, wherein the anodic compartments (13, 23) of the cells (11, 21) of the two MCFC units (10, 20) are supplied with fuel gas and have respective anodic outlets (17, 27) connected to respective CO₂-capture units (31, 32).

5. The system according to any one of the preceding claims, wherein the first MCFC unit (10) comprises a plurality of stacks of first cells (11) without active direct internal reformer, and the cathodic compartments (12) of the first cells (11) are connected in parallel via the network (30).

6. The system according to any one of the preceding claims, wherein the first and second MCFC units (10, 20) comprise respective pluralities of blocks of cells (11, 21) or of stacks of cells (11, 21); and wherein each block of first cells (11) supplies one or more blocks of second cells (21) or, vice versa, each block of second cells (21) is supplied with the cathodic exhaust of several blocks of first cells (11).

7. A combined-cycle plant for the production of energy, comprising a gas-turbine assembly (52), a steam-turbine assembly (53), and a system (1) according to any one of the preceding claims; and wherein the combustion exhaust gas coming out of the gas-turbine assembly (52) supplies the cathodic compartments (12) of the first cells (11) that form the first MCFC unit (10) of the system (1).

8. A method for separating CO₂ from combustion exhaust gas by means of MCFC multistacks, wherein the exhaust gas are sent through cathodic compartments (12) of first MCFC cells (11) without active direct internal reformer before being introduced into cathodic compartments (22) of second MCFC cells (21) with active direct internal reformer.

9. The method according to Claim 8, comprising the steps of:
- providing first MCFC cells (11) without active direct internal reformer, and second MCFC cells (21) with active direct internal reformer, the first and second cells (11, 21) having respective cathodic compartments (12, 22) connected in series;
- sending the exhaust gas through the cathodic compartments (12) of the first cells (11), without active direct internal reformer; and
- supplying the cathodic compartments (22) of the second cells (12) with the cathodic exhaust of the first cells (11), without adding gases that include portions of exhaust gas that have not previously passed into cathodic compartments (12) of the first cells (11).

## Patentansprüche

1. System zum Abscheiden von CO₂ aus Verbrennungsabgas mit Hilfe von MCFC-Mehrfachstapeln, das umfasst: eine erste MCFC-Einheit (10) und eine zweite MCFC-Einheit (20), die jeweils Zellen (11, 21) mit jeweiligen Kathodenfeldern (12, 22) und jeweiligen Anodenfeldern (13, 23) aufweisen; wenigstens eine CO₂-Einfangeinheit (31, 32); und ein Verbindungsnetz (30), das die MCFC-Einheiten (10, 20) miteinander und mit den CO₂-Einfangeinheiten (31, 32) verbindet; wobei das System **dadurch gekennzeichnet ist, dass** die erste MCFC-Einheit (10) durch eine oder mehrere erste MCFC-Zellen (11) ohne aktiven direkten internem Reformer gebildet ist; und die zweite MCFC-Einheit (20) durch eine oder mehrere zweite MCFC-Zellen (21) mit aktivem direktem internem Reformer gebildet ist; und dadurch, dass das Verbindungsnetz die MCFC-Einheiten (10, 20) auf eine Weise verbindet, dass das Abgas, das behandelt werden soll, den Kathodenfeldern (12) der ersten Zellen (11), die die erste Einheit (10) bilden, zugeführt wird, und dass die Kathodenfelder (22) der zweiten Zellen (21), die die zweite Einheit (20) bilden, mit einem Kathodenausstoß der ersten Einheit (10) versorgt werden, entweder ausschließlich oder mit Zusätzen, die keine Anteile des Abgases enthalten, die nicht vorher die Kathodenfeldern (12) von Zellen (11) der ersten Einheit (10) durchlaufen haben.

2. System nach Anspruch 1, wobei die erste Einheit (10) nur erste Zellen (11) umfasst, die aus der Gruppe ausgewählt sind, die besteht aus: Zellen mit indirektem internem Reformer, Zellen mit indirektem internem Reformer, der längsseits eines externen Reformers angeordnet ist, Zellen mit indirektem internem Reformer, der längsseits eines Wasserstoff-Wiedergewinnungssystems angeordnet ist, Zellen mit externem Reformer, Zellen ohne Reformer, denen nur wiedergewonnener Wasserstoff zugeführt wird, und Kombinationen davon.

3. System nach Anspruch 1 oder Anspruch 2, wobei die zweite MCFC-Einheit (20) eine oder mehrere zweite Zellen (21), die mit direkten internen Reformern (41) eines DIR-Typs oder vorzugsweise eines AIR-Typs ausgestattet sind, umfasst.

4. System nach einem der vorhergehenden Ansprüche, wobei die Anodenfelder (13, 23) der Zellen (11, 21) der zwei MCFC-Einheiten (10, 20) mit Brenngas versorgt werden und jeweils Anodenauslässe (17, 27), die mit jeweiligen CO₂-Einfangeinheiten (31, 32) verbunden sind, aufweisen.

5. System nach einem der vorhergehenden Ansprüche, wobei die erste MCFC-Einheit (10) mehrere Stapel erster Zellen (11) ohne aktiven direkten internen Reformer umfasst, und die Kathodenfelder (12) der ersten Zellen (11) parallel über das Netz verbunden sind.

6. System nach einem der vorhergehenden Ansprüche, wobei die erste und die zweite MCFC-Einheit (10, 20) jeweils mehrere Blöcke von Zellen (11, 21) oder von Stapeln von Zellen (11, 21) umfasst; und wobei jeder Block erster Zellen (11) einen oder mehrere Blöcke zweiter Zellen (21) versorgt oder umgekehrt jeder Block zweiter Zellen (21) mit Kathodenausstoß mehrerer Blöcke erster Zellen (11) versorgt wird.

7. Kombikraftwerk zur Energieerzeugung, das eine Gasturbinenanordnung (52), eine Dampfturbinenanordnung (53) und ein System (1) nach einem der vorhergehenden Ansprüche umfasst; und wobei das Verbrennungsabgas, das aus der Gasturbinenanordnung (52) austritt, die Kathodenfelder (12) der ersten Zellen (11), die die erste MCFC-Einheit (10) des Systems (1) bilden, versorgt.

8. Verfahren zum Abscheiden von CO₂ aus Verbrennungsabgas mit Hilfe von MCFC-Mehrfachstapeln, wobei das Abgas durch Kathodenfelder (12) erster MCFC-Zellen (11) ohne aktiven direkten internen Reformer geleitet wird, bevor es in Kathodenfelder (22) zweiter MCFC-Zellen (21) mit aktivem direktem internen Reformer eingeführt wird.

9. Verfahren nach Anspruch 8, das die Schritte umfasst:
- Bereitstellen erster MCFC-Zellen (11) ohne aktiven direkten internen Reformer und zweiter MCFC-Zellen (21) mit aktivem direktem internem Reformer, wobei die ersten und zweiten Zellen (11, 21) jeweils Kathodenfelder (12, 22) aufweisen, die in Reihe geschaltet sind;
- Leiten des Abgases durch die Kathodenfelder (12) der ersten Zellen (11) ohne aktiven direkten internen Reformer; und
- Versorgen der Kathodenfelder (22) der zweiten Zellen (12) mit dem Kathodenausstoß der ersten Zellen (11) ohne Hinzufügen von Gasen, die Anteile von Abgas enthalten, die nicht vorher die Kathodenfelder (12) der ersten Zellen (11) durchlaufen haben.

## Revendications

1. Système de séparation du CO₂ des gaz d'échappement de combustion au moyen d'empilements multiples de MCFC, comprenant : une première unité MCFC (10) et une deuxième unité MCFC (20), ayant des cellules respectives (11, 21) comportant des compartiments cathodiques respectifs (12, 22) et des compartiments anodiques respectifs (13, 23) ; au moins une unité de capture de CO₂ (31, 32) ; et un réseau de connexion (30) qui connecte les unités MCFC (10, 20) l'une à l'autre et aux unités de capture de CO₂ (31, 32) ; le système étant **caractérisé en ce que** la première unité MCFC (10) est formée par une ou plusieurs première(s) cellule(s) de MCFC (11) sans reformeur interne direct actif ; et la deuxième unité MCFC (20) est formée par une ou plusieurs deuxième(s) cellule(s) de MCFC (21) avec reformeur interne direct actif ; et **en ce que** le réseau de connexion connecte les unités MCFC (10, 20) de sorte que les gaz d'échappement à traiter soient alimentés aux compartiments cathodiques (12) des premières cellules (11) qui forment la première unité (10), et que les compartiments cathodiques (22) des deuxièmes cellules (21) qui forment la deuxième unité (20) soient alimentés en gaz d'échappement cathodiques de la première unité (10), soit seuls soit avec des ajouts qui ne comportent pas des parties de gaz d'échappement n'ayant pas passées préalablement dans les compartiments cathodiques (12) des cellules (11) de la première unité (10).

2. Système selon la revendication 1, dans lequel la première unité (10) comprend seulement des premières cellules (11) choisies dans le groupe constitué : de cellules avec reformeur interne indirect, de cellules avec reformeur interne indirect placé à côté d'un reformeur externe, de cellules avec reformeur interne indirect placé à côté d'un système de récupération d'hydrogène, de cellules avec reformeur externe, de cellules sans reformeur et ne sont alimentées qu'avec l'hydrogène récupéré, et de leurs combinaisons.

3. Système selon la revendication 1 ou 2, dans lequel la deuxième unité MCFC (20) comprend une ou plusieurs deuxième(s) cellule(s) (21) équipée(s) de reformeurs internes directs (41) de type DIR ou, de préférence, de type AIR.

4. Système selon l'une quelconque des revendications précédentes, dans lequel les compartiments anodiques (13, 23) des cellules (11, 21) des deux unités MCFC (10, 20) sont alimentés en gaz combustible et ont des sorties anodiques respectives (17, 27) connectées à des unités de capture de CO₂ respectives (31, 32).

5. Système selon l'une quelconque des revendications précédentes, dans lequel la première unité MCFC (10) comprend une pluralité d'empilements de premières cellules (11) sans reformeur interne direct actif, et les compartiments cathodiques (12) des premières cellules (11) sont connectés en parallèle par l'intermédiaire du réseau (30).

6. Système selon l'une quelconque des revendications précédentes, dans lequel les première et deuxième unités MCFC (10, 20) comprennent des pluralités respectives de blocs de cellules (11, 21) ou d'empilements de cellules (11, 21) ; et dans lequel chaque bloc de premières cellules (11) alimente un ou plusieurs bloc(s) de deuxièmes cellules (21) ou, vice versa, chaque bloc de deuxièmes cellules (21) est alimenté en gaz d'échappement cathodiques de plusieurs blocs de premières cellules (11).

7. Installation à cycle combiné pour la production d'énergie, comprenant un ensemble de turbine à gaz (52), un ensemble de turbine à vapeur (53), et un système (1) selon l'une quelconque des revendications précédentes ; et où le gaz d'échappement de combustion sortant de l'ensemble de turbine à gaz (52) alimente les compartiments cathodiques (12) des premières cellules (11) qui forment la première unité MCFC (10) du système (1).

8. Procédé de séparation du CO₂ des gaz d'échappement de combustion au moyen d'empilements multiples de MCFC, dans lequel les gaz d'échappement sont envoyés à travers des compartiments cathodiques (12) de premières cellules de MCFC (11) sans reformeur interne direct actif avant d'être introduits dans des compartiments cathodiques (22) de deuxièmes cellules de MCFC (21) avec reformeur interne direct actif.

9. Procédé selon la revendication 8, comprenant les étapes qui consistent :
à fournir des premières cellules de MCFC (11) sans reformeur interne direct actif, et des deuxième cellules de MCFC (21) avec reformeur interne direct actif, les premières et deuxièmes cellules (11, 21) ayant des compartiments cathodiques respectifs (12, 22) connectés en série ;
à envoyer les gaz d'échappement à travers les compartiments cathodiques (12) des premières cellules (11), sans reformeur interne direct actif ; et
à alimenter les compartiments cathodiques (22) des deuxièmes cellules (12) en gaz d'échappement cathodiques des premières cellules (11), sans ajouter des gaz qui comportent des parties de gaz d'échappement n'ayant pas passées préalablement dans les compartiments cathodiques (12) des premières cellules (11).
